# EUROPEAN PATENT APPLICATION

(11) **EP 4 467 608 A1**
(43) Date of publication of application: **27.11.2024**
(21) Application number: 23756085.9
(22) Date of filing: 19.01.2023
(51) Int. Cl.: C08L 53/02, C08F 8/08, C08F 297/04, C08L 67/02

(54) **BLOCK COPOLYMER-CONTAINING BLOCK COPOLYMER COMPOSITION, BLOCK COPOLYMER RESIN COMPOSITION, MOLDED ARTICLE, SHEET, AND FILM**

(30) Priority: 16.02.2022 JP 2022022372
(71) Applicant: Denka Company Limited, Tokyo 103-8338 (JP)
(72) Inventor: NAKANISHI, Soichiro, Tokyo 103-8338 (JP); NAKAMURA, Yuya, Tokyo 103-8338 (JP); SAWASATO, Tadashi, Tokyo 103-8338 (JP)
(74) Representative: Gulde & Partner
(86) International application number: PCT/JP2023/001578
(87) International publication number: WO 2023/157557

(57) **Abstract**

The present invention provides a block copolymer composition capable of preventing a decrease in transparency of a resin to be obtained while maintaining a property of imparting impact resistance, in which a vinyl aromatic hydrocarbon monomer unit and a conjugated diene monomer unit are contained in a mass ratio of 70/30 to 50/50, and an active oxirane oxygen concentration calculated from an epoxy equivalent measured in accordance with JIS K7236:2001 is 0.05 mass% to 0.5 mass%. The present invention also provides a block copolymer resin composition containing the block copolymer composition, and a molded article, a sheet and a film molded from a molding material containing the block copolymer resin composition.

## Description

### Technical Field

The present invention relates to a block copolymer composition containing a block copolymer, the block copolymer composition containing a vinyl aromatic hydrocarbon monomer unit and a conjugated diene monomer unit and having a predetermined active oxirane oxygen concentration; a block copolymer resin composition containing the block copolymer composition; and a molded article, a sheet, and a film, molded from a molding material containing the block copolymer resin composition.

### Background Art

Block copolymers consisting of the vinyl aromatic hydrocarbon monomer unit and the conjugated diene monomer unit are widely used for film applications and in the field of packaging containers. In particular, the block copolymers consisting of a styrene monomer unit and a butadiene monomer unit are widely used to modify the impact resistance of general-purpose polystyrene (GPPS) while maintaining its transparency, and are widely used for packaging containers for food products and sundries. For the sheets and containers of these block copolymers, various proposals have been made to further improve the properties such as impact resistance (Patent Literatures 1 to 9).

### Citation List

### Patent Literature

[Patent Literature 1] JP-A-Hei11-228777
[Patent Literature 2] JP-B-Hei6-92522
[Patent Literature 3] JP-A-2005-139326
[Patent Literature 4] JP-A-2012-25835
[Patent Literature 5] JP-A-Sho55-23123
[Patent Literature 6] JP-A-Hei8-113225
[Patent Literature 7] JP-A-Sho49-66744
[Patent Literature 8] JP-A-2017-210586
[Patent Literature 9] WO2013/168679

### Summary of Invention

### Technical Problem

Even when both the block copolymer consisting of styrene monomer unit and butadiene monomer unit and another resin to be modified by the block copolymer (e.g., polyethylene terephthalate) are highly transparent, if both are incompatible with each other, the transparency of the resin composition obtained by mixing both decreases due to light scattering, making the resin composition more clouded. In view of such a phenomenon, an object of the present invention is to provide a block copolymer composition capable of preventing a decrease in transparency of the resin composition to be obtained while maintaining the property of imparting impact resistance when the transparent resins that are intrinsically incompatible with each other are mixed. Further, another object of the present invention is to provide a block copolymer resin composition containing the block copolymer composition, and a molded article, a sheet, and a film molded from a molding material containing the block copolymer resin composition.

### Solution to Problem

As a result of various studies to achieve the above-described objects, the inventors have found that the objects can be achieved by making a block copolymer into a block copolymer composition, the block copolymer composition containing the block copolymer, the block copolymer containing a vinyl aromatic hydrocarbon monomer unit and a conjugated diene monomer unit in a ratio within a specific range and further having an epoxy group introduced therein in an amount within a specific range.

Namely, the present invention is as follows.
(1) A block copolymer composition, containing a block copolymer containing a vinyl aromatic hydrocarbon monomer unit and a conjugated diene monomer unit, wherein:
   a mass ratio of the vinyl aromatic hydrocarbon monomer unit to the conjugated diene monomer unit contained in the block copolymer is 70/30 to 50/50; and
   an active oxirane oxygen concentration, calculated from an epoxy equivalent measured in accordance with JIS K7236:2001, is 0.05 mass% to 0.5 mass%.
(2) The block copolymer composition of (1), wherein a peak top molecular weight of the block copolymer composition is 30,000 to 100,000.
(3) A block copolymer resin composition, containing: at least one resin selected from a group consisting of polyacrylate, polyphenylene ether, polycarbonate, polyester, polyamide, polyvinyl alcohol, polyacetal, polyether etherimide, polysulfone, and polyurethane; and the block copolymer composition of (1) or (2) in a mass ratio of the resin / the block copolymer composition = 97/3 to 40/60, wherein a value of a total light transmittance measured in accordance with JIS K7375:2008 is 80% or higher and 100% or lower.
(4) A molded article, sheet, or film, molded from a molding material containing the block copolymer resin composition of (3) .

In the present specification, unless otherwise specified, a numerical value range indicated by "-" means a range of the numerical values "equal to or greater than" the numerical value on the left side and "equal to or less than" the numerical value on the right side. For example, "A-B" or "A to B" means being equal to or greater than A and equal to or less than B.

### Advantageous Effects of Invention

According to the present invention, it is possible to provide a block copolymer composition containing a vinyl aromatic hydrocarbon monomer unit and a conjugated diene monomer unit and having a predetermined active oxirane oxygen concentration, which prevents a decrease in transparency of the resin composition to be obtained while maintaining the property of imparting impact resistance when mixing the resins which are intrinsically incompatible with each other. It is further possible to provide a block copolymer resin composition containing the block copolymer composition of the present invention, and a molded article, a sheet, and a film, molded from a molding material containing the block copolymer resin composition.

### Description of Embodiments

Hereinafter, one embodiment of the present invention will be described in detail. The present invention is not limited to the following embodiment, and may be implemented with an appropriate modification to the extent that the effects of the present invention are not hindered.

### [Block Copolymer Composition]

The block copolymer composition of one embodiment of the present invention has the features described below.

### <Block Copolymer Composition>

The block copolymer composition of one embodiment of the present invention contains one or more kinds of block copolymers containing a vinyl aromatic hydrocarbon monomer unit and a conjugated diene monomer unit and having a reactive epoxy group introduced therein. The block copolymer composition may be used in combination with additives and other resins to the extent that the effects are not hindered. The reactive epoxy group is preferably introduced at the terminal of the block copolymer.

### [Block Copolymer]

All of the one or more kinds of the block copolymers contained in the block copolymer composition of one embodiment of the present invention preferably have a structure in which a polyvinyl aromatic hydrocarbon block, a polyconjugated diene block, and a tapered block in which the vinyl aromatic hydrocarbon monomer unit and the conjugated diene monomer unit are copolymerized with their compositions changing stepwise are arbitrarily combined. The tapered block has a structure obtained by collectively adding and polymerizing the vinyl aromatic hydrocarbon monomers and the conjugated diene monomers in the presence of polymerization active species. Two or more kinds of the block copolymers may be contained in the block copolymer composition.

Examples of the vinyl aromatic hydrocarbon monomer include styrene, o-methylstyrene, p-methylstyrene, p-tert-butylstyrene, 2,4-dimethylstyrene, 2,5-dimethylstyrene, α-methylstyrene, vinylnaphthalene, and vinylanthracene. Among these, styrene is preferred in terms of easiness of controlling the polymerization reaction and availability. Not only one kind but also two or more kinds of the vinyl aromatic hydrocarbon monomers may be used.

Examples of the conjugated diene monomer include 1,3-butadiene, 2-methyl-1,3-butadiene (isoprene), 2,3-dimethyl-1,3-butadiene, 1,3-pentadiene, 1,3-hexadiene, β-myrcene, and β-farnesene. Among these, 1,3-butadiene or isoprene is preferred in terms of easiness of controlling the polymerization reaction and availability, and 1,3-butadiene is more preferred. Not only one kind but also two or more kinds of the conjugated diene monomers may be used.

The block copolymer composition of one embodiment of the present invention may contain two or more kinds of the block copolymers having different peak top molecular weights. The chemical structures of the block copolymers contained are preferably represented by the following general formulas (I) to (III), and the block copolymer composition may contain the block copolymers containing the vinyl aromatic hydrocarbon monomer unit and the conjugated diene monomer unit and having different peak top molecular weights. It should be noted that the peak top molecular weight in the present invention is the molecular weight at the point of highest peak intensity in GPC measurement.

S-T-B-X (I)

S-T-B (II)

S-T (III)

In the above-described general formulas (I) to (III), S is a polymer block having vinyl aromatic hydrocarbon as a monomer unit, T is a tapered block having vinyl aromatic hydrocarbon and conjugated diene as monomer units, and B is a polymer block having conjugated diene as a monomer unit. X is a residue containing an epoxy group derived from an epoxidizing agent.

Such a chemical structure of the block copolymer allows the block copolymer composition to improve impact resistance without decreasing the transparency of the block copolymer resin composition obtained by mixing the block copolymer composition with another resin.

In the above-described general formulas (I) to (III), the peak top molecular weight of S, T or B is not particularly limited. It is preferably 8,000 or higher, and more preferably 8,000 to 60,000. If the peak top molecular weight of S is 8,000 or higher, the entanglement of polymer chains is maintained, and the impact resistance modification effect can therefore be maintained. Further, if the peak top molecular weight of T or B is 60,000 or lower, a decrease in flowability can be prevented.

The block copolymer of one embodiment of the present invention, containing the vinyl aromatic hydrocarbon monomer unit and the conjugated diene monomer unit and having a reactive epoxy group introduced at the terminal, can be obtained by living anionic polymerization as described below and subsequent reaction to introduce an epoxy group into the block copolymer.

The block copolymer of one embodiment of the present invention preferably has at least one peak in a peak top molecular weight (Mp) range of 30,000 to 100,000 in gel permeation chromatography (GPC). In particular, the range of 40,000 to 80,000 is more preferred. If the peak top molecular weight (Mp) is 30,000 or higher, difficulty in mixing the block copolymer with the resin to be modified due to a decrease in the resin viscosity can be avoided. If the peak top molecular weight (Mp) is 100,000 or lower, a decrease in flowability can be prevented.

The above-described peak top molecular weight (Mp) is determined from the position of the apex of the peak of the molecular weight distribution obtained by gel permeation chromatography (GPC). For example, if the block copolymer composition contains the block copolymer having two or more peak top molecular weights and thus has a plurality of peaks in GPC, the peak top molecular weight is a molecular weight for the peak corresponding to the peak having the largest area ratio. It should be noted that the molecular weight in the present invention is a molecular weight obtained by conversion based on the molecular weight of standard polystyrene measured using a specific measuring device and under specific measuring conditions.

The content ratio (mass%) of the conjugated diene monomer unit with respect to 100 mass% of the total mass of the vinyl aromatic hydrocarbon monomer unit and the conjugated diene monomer unit in the block copolymer composition of one embodiment of the present invention is 30 mass% to 50 mass%. In particular, the content ratio (mass%) of the conjugated diene monomer unit is preferably 40 mass% to 50 mass%. If the content ratio (mass%) of the conjugated diene monomer unit is 30 mass% or more, the impact resistance modification effect tends to be easily maintained, and by setting the content ratio (mass%) to 50% or less, kneading with the resin to be modified can be easier. It should be noted that the content ratio of the conjugated diene monomer means the total content ratio of the conjugated diene monomers used in combination when the conjugated diene monomers are used in combination.

The above-described content ratio (mass%) of the conjugated diene monomer unit with respect to 100 mass% of the total mass of the vinyl aromatic hydrocarbon monomer unit and the conjugated diene monomer unit can be calculated from the ratio of the conjugated diene monomer used with respect to the total monomer amount of the vinyl aromatic hydrocarbon monomer and the conjugated diene monomer used in the synthesis. As a method for analyzing the content ratio (mass%) of the conjugated diene monomer unit with respect to 100 mass% of the total mass of the vinyl aromatic hydrocarbon monomer unit and the conjugated diene monomer unit in the block copolymer from the block copolymer in which the amounts of monomers used are unknown, the following method using an automatic titrator is available, for example.
(1) 0.2 g of the sample is placed in a 200 mL beaker and 50 mL of chloroform is added to dissolve it.
(2) After the sample is completely dissolved, 15 mL of Wijs reagent (0.1 mol/L-iodine chloride/acetic acid solution, made by FUJIFILM Wako Pure Chemicals Corporation) is added and left for 1 h or longer.
(3) Then, 20 mL of 4% potassium iodide solution and 50 mL of pure water are added and mixed thoroughly.
(4) Electrodes are immersed to titrate with 0.1 mol/L sodium thiosulfate solution.
(5) After the titration is complete, the amount of sodium thiosulfate solution consumed a [mL] is measured.

To perform correction by blank measurement, the operations (1) to (6) are also performed for chloroform only, and the amount of 0.1 mol/L sodium thiosulfate solution consumed b [mL] is measured.

The content ratio of conjugated diene can be calculated from the measured values in accordance with the following formula. Content ratio of conjugated diene (%) = [(b-a) × 0.1 × c × 27/1000]/W × 100
c: Titer of 0.1 mol/L sodium thiosulfate solution
W: Mass of sample [g].

The active oxirane oxygen concentration of the block copolymer composition of one embodiment of the present invention is 0.05 mass% to 0.5 mass%. By setting the active oxirane oxygen concentration to 0.05 mass% or higher, the tendency to prevent a decrease in transparency of the block copolymer resin composition obtained by mixing the block copolymer composition with a resin is increased, and by setting the active oxirane oxygen concentration to 0.5 mass% or lower, the tendency to prevent a decrease in flowability of the block copolymer resin composition is increased.

### (Method for Producing Block Copolymer Composition)

The block copolymer composition of one embodiment of the present invention can be produced as follows. That is, each block copolymer composition can be produced by anionic polymerization of monomers of vinyl aromatic hydrocarbon and conjugated diene in an organic solvent using an organic lithium compound as a polymerization initiator and by epoxidizing it. As the organic solvent, aliphatic hydrocarbons such as butane, pentane, hexane, isopentane, heptane, octane and isooctane, alicyclic hydrocarbons such as cyclopentane, methylcyclopentane, cyclohexane, methylcyclohexane and ethylcyclohexane, aromatic hydrocarbons such as ethylbenzene and xylene, and the like can be used. Cyclohexane is preferred in terms of the solubility of the block copolymer composition.

The organic lithium compound is a compound in which one or more lithium atoms are bonded to a carbon atom in the molecule. For example, monofunctional organic lithium compounds such as ethyl lithium, n-propyl lithium, isopropyl lithium, n-butyl lithium, sec-butyl lithium and tert-butyl lithium, multifunctional organic lithium compounds such as hexamethylene dilithium, butadienyl dilithium and isoprenyl dilithium, or the like can be used.

The above-described vinyl aromatic hydrocarbon monomer and conjugated diene monomer can be used, and one kind or two or more kinds of each can be selected and used for polymerization. In the living anionic polymerization using the above-described organic lithium compound as a polymerization initiator, almost all of the vinyl aromatic hydrocarbon monomer and conjugated diene monomer used in the polymerization reaction are converted into the polymer.

The peak top molecular weight of the block copolymer composition of one embodiment of the present invention can be controlled by the total amount of monomers added with respect to the amount of polymerization initiator added.

A randomizing agent is a compound that acts as a Lewis base in the reaction. As the randomizing agent, amines, ethers, thioethers, phosphoramides, alkylbenzenesulfonates, and others such as potassium or sodium alkoxides can be used. Examples of the amines include tertiary amines such as trimethylamine, triethylamine, tetramethylethylenediamine, and cyclic tertiary amines. Examples of the ethers include dimethyl ether, diethyl ether, diphenyl ether, diethylene glycol dimethyl ether, diethylene glycol diethyl ether, diethylene glycol dibutyl ether, and tetrahydrofuran (THF). Examples of the others include triphenylphosphine, hexamethylphosphoramide, potassium or sodium alkylbenzenesulfonate, and butoxides of potassium, sodium or the like. Tetrahydrofuran (THF) is preferably used.

One or more kinds of the randomizing agents can be used. The addition concentration thereof is preferably 0.001 parts by mass to 10 parts by mass per 100 parts by mass of the raw material monomers. The timing of addition may be before the start of the polymerization reaction or before the polymerization of the copolymerized chain. It can also be added further as needed.

After all monomers are added and polymerization is complete, an epoxy group can be introduced by adding an epoxidizing agent to make the block copolymer composition. Epoxidizing means that a covalent bond is formed between the living active site located at one terminal of the polymer chain and the reaction site in the molecule of the epoxidizing agent, thereby obtaining a polymer having an epoxy group at the terminal of the polymer chain. The epoxidizing agent is a compound having one or more epoxy groups in the molecule in addition to the reaction site to which the living active site may attack, such as an ester bond and a ketone group.

The epoxidizing agent is not limited, and examples thereof include epoxidized fats and oils such as epoxidized soybean oil and epoxidized linseed oil, and epoxidized polybutadiene. Epoxidized fats and oils is preferred, and epoxidized soybean oil is more preferred.

One kind of the epoxidizing agent may be used alone, or two or more kinds of the epoxidizing agents may be used in combination.

The reaction sites to which the living active site in the epoxidizing agent may attack do not necessarily need to be fully reacted, and some reaction sites may remain unreacted. In such cases, 1 mass% or less of the epoxidizing agent may be contained in the block copolymer composition. It should be noted that the content of the epoxidizing agent means the total content of the epoxidizing agents used in combination when the epoxidizing agents are used in combination.

The amount of the epoxidizing agent added is preferably set so that the reaction sites of the epoxidizing agent exist in a stoichiometric amount or more with respect to the living active terminal. Specifically, the molar number of all the reaction sites to which the living active terminal may attach is preferably 1 to 4 equivalents with respect to the living active terminal present in the polymerization liquid before the epoxidizing step, and more preferably 3 to 4 equivalents. It should be noted that the equivalent of the epoxidizing agent means the total equivalent of the epoxidizing agents used in combination when the epoxidizing agents are used in combination.

The reaction solution containing the block copolymer composition thus obtained can be deactivated by adding a polymerization stopper such as water, alcohol, or carbon dioxide in an amount sufficient to deactivate the active terminals. As a method of recovering the block copolymer composition from the organic solvent solution, an arbitrary method, such as a method of precipitating the copolymer with a poor solvent such as methanol, a method of evaporating the solvent by a heating roll or the like to precipitate the copolymer (drum dryer method), a method of removing the solvent by a vent extruder after concentration of the solution by a concentrator, and a method of dispersing the solution in water and recovering the copolymer by heating and removing the solvent by blowing steam (steam stripping method) can be employed.

The block copolymer composition of one embodiment of the present invention can be kneaded with another resin to form the block copolymer resin composition. At least one resin selected from the group consisting of polyacrylate, polyphenylene ether, polycarbonate, polyester, polyamide, polyvinyl alcohol, polyacetal, polyether etherimide, polysulfone, and polyurethane is cited as the resin to be kneaded. One kind of these may be used alone, or two or more kinds of these may be used in combination. Among these, polyester, polyphenylene ether, and polycarbonate are preferred, and polyester is more preferred. Further, polyethylene terephthalate (also abbreviated as PET) is preferred as a polyester, and amorphous polyethylene terephthalate (also abbreviated as A-PET) and glycol modified polyethylene terephthalate (also abbreviated as PET-G) are most preferred among PETs.

The block copolymer resin composition of one embodiment of the present invention preferably contains the resin to be modified and the above-described block copolymer composition in a mass ratio of the resin / the block copolymer composition = 97/3 to 40/60. It should be noted that the content of the block copolymer composition means the total content of the block copolymer compositions used in combination when the block copolymer compositions are used in combination.

Further, the value of the total light transmittance of the block copolymer resin composition measured in accordance with JIS K7375:2008 is preferably 80% or higher and 100% or lower.

The content ratio of the block copolymer composition in the block copolymer resin composition of one embodiment of the present invention is preferably 60.0 mass% or less with respect to 100 mass% of the total mass of the block copolymer composition and the resin to be modified, since this prevents an extreme decrease in rigidity.

### <Additives>

The block copolymer resin composition of one embodiment of the present invention can further contain various additives as needed. In other words, to cope with deterioration of physical properties or to further impart physical properties suitable for the purpose of use, in the case where various heat treatments are performed when producing the block copolymer resin composition containing the block copolymer composition or when molding processing into a sheet or container, in the case where the molded article is used under an oxidizing atmosphere, irradiation of ultraviolet rays or the like, or in other cases, additives such as stabilizers, lubricants, processing aids, antiblocking agents, antistatic agents, antifogging agents, weather resistance improving agents, softening agents, plasticizers, pigments, mineral oils, fillers, and flame retardants can be added for example.

Examples of the stabilizer include phenolic antioxidants such as 2-[1-(2-hydroxy-3,5-di-tert-pentylphenyl)ethyl]-4,6-di-tert-pentylphenyl acrylate, 2-tert-butyl-6-(3-tert-butyl-2-hydroxy-5-methylbenzyl)-4-methylphenyl acrylate, octadecyl-3-(3,5-di-tert-butyl-4-hydroxyphenyl)propionate, and 2,6-di-tert-butyl-4-methylphenol; and phosphorus antioxidants such as 2,2-methylenebis(4,6-di-tert-butylphenyl)octyl phosphite, trisnonylphenylphosphite, and bis(2,6-di-tert-butyl-4-methylphenyl)pentaerythritol-di-phosphite.

Examples of the lubricant, the processing aid, the antistatic agent, the antifogging agent, and the antiblocking agent that can be added include saturated fatty acids such as palmitic acid, stearic acid, and behenic acid; fatty acid esters such as octyl palmitate and octyl stearate; pentaerythritol fatty acid esters; fatty acid amides such as erucic acid amide, oleic acid amide, stearic acid amide, and behenic acid amide; ethylene bis stearic acid amide; glycerin-mono-fatty acid esters and glycerin-di-fatty acid esters; sorbitan fatty acid esters such as sorbitan-mono-palmitic acid ester and sorbitan-mono-stearate ester; higher alcohols such as myristyl alcohol, cetyl alcohol, and stearyl alcohol; and impact-resistant polystyrene (HIPS).

Examples of the weather resistance improving agent include benzotriazole-based weather resistance improving agents such as 2-(2'-hydroxy-3'-tert-butyl-5'-methylphenyl)-5-chlorobenzotriazole, salicylate-based weather resistance improving agents such as 2,4-di-tert-butylphenyl-3',5'-di-tert-butyl-4'-hydroxybenzoate, benzophenone-based ultraviolet absorbers such as 2-hydroxy-4-n-octoxybenzophenone, and hindered amine-type weather resistance improving agents such as tetrakis(2,2,6,6-tetramethyl-4-piperidyl)-1,2,3,4-butanetetracarboxylate. Further, silicone oil, microcrystalline wax and the like can also be added.

These additives are preferably used in the range of 7 mass% or less, more preferably 5 mass% or less, and even more preferably 0 to 3 mass%, in 100 mass% of the block copolymer resin composition.

The block copolymer resin composition of one embodiment of the present invention can be further blended with other resins as needed to make a molding material. The molded article molded from the molding material containing the block copolymer composition of one embodiment of the present invention can achieve high impact resistance and flowability in good balance without reducing other properties such as transparency and heat resistance. The mechanism behind this is not entirely clear at this stage. However, as can be seen from the comparison of Examples and Comparative Examples described below, it is believed that the epoxy group reacts with the functional group in the resin to be modified, such as a carbonyl group and a hydroxyl group, to form a covalent bond between the resin to be modified and the block copolymer, and acts as a dispersing agent for two resins that are intrinsically incompatible with each other, thereby achieving the mechanism.

The molded article, sheet and film of one embodiment of the present invention can be produced by any conventionally known molding processing method. For example, they can be obtained by extrusion molding, injection molding, hollow molding, and compression molding of the above-described resin composition. In other words, the molded article can be made into a wide variety of practically useful products such as extrusion molded articles, injection molded articles, hollow molded articles, pressure molded articles, vacuum molded articles, biaxially stretched molded articles, and the like. These molding processing methods can also be combined as primary, secondary, and tertiary processing. The sheet and film of the embodiment of the present invention may not have heat-shrinkablity.

### (Purpose of Use)

The molded article can be made into a sheet and a container. In other words, it can be made into a polystyrene-based sheet suitable for making containers and a container made of the sheet. The sheet and container have excellent impact resistance and transparency. The sheet and container may be made of a non-foamed material or a foamed material. The shapes of the sheet and container are not particularly limited, and various shapes may be adopted depending on the purpose of use. For example, a lunch box container, a fitting container, a platter, a plate, a tray, a bowl, a cup, a lid, a cutting board, a pencil box, an underlay, a clear file, a clear case and the like can be mentioned.

The thicknesses of the sheet and container are not particularly limited, and various thicknesses may be adopted depending on the purpose of use. As a general thickness, a thickness of 0.05 mm to 5 mm is preferred. The rigidities of the sheet and container can be maintained by setting the thickness to 0.05 mm or larger. On the other hand, the molding processing can be easily performed by setting the thickness to 5 mm or smaller. A thickness of 0.1 mm to 1.5 mm is particularly preferred.

### Examples

Hereinafter, Examples are provided to further describe the present invention, but the interpretation of the present invention is not limited by these Examples.

### [Epoxidizing Agent]

Epoxidized soybean oil was used as the epoxidizing agent. ADK CIZER O-130P made by ADEKA CORPORATION was used as the epoxidized soybean oil.

### [Initiator]

Normal butyl lithium was used as the initiator for living anionic polymerization. As normal butyl lithium, a product made by Rockwood Lithium Japan K.K. was used.

### [Resin To Be Modified]

As the resin to be modified, amorphous polyethylene terephthalate, GN001 made by Eastman Chemical Company was used. It was dried at 80°C for 12 h or longer and used.

### <Preparation of Block Copolymer Composition A>

The block copolymer composition A of styrene and 1,3-butadiene was produced by the following operations (1) to (7) .
(1) 500.0 kg of cyclohexane and 75.0 g of tetrahydrofuran (THF) were charged into a reaction vessel.
(2) As a polymerization initiator solution, 2,157 mL of a 10 mass% hexane solution of n-butyl lithium was added thereinto, and the temperature was kept at 30°C.
(3) 20.6 kg of styrene was added, and the internal temperature was raised to 80°C to allow anionic polymerization of styrene.
(4) After styrene was completely consumed, the internal temperature of the reaction system was lowered to 50°C, then 37.4 kg of styrene and 35.1 kg of 1,3-butadiene were added, and the internal temperature was raised to 80°C for polymerization.
(5) After the monomers were completely consumed, the internal temperature of the reaction system was lowered to 50°C, then 6.9 kg of 1,3-butadiene was added, and the internal temperature was raised to 80°C for polymerization.
(6) After 1,3-butadiene was completely consumed, 578 g of epoxidized soybean oil was added to the reaction system, and the internal temperature was lowered to 50°C for the reaction.
(7) Finally, after all polymerization active terminals were deactivated by water, the polymerization liquid was dropped into methanol, and the precipitate was dried to obtain the block copolymer composition A. The peak top molecular weight (Mp) was 65,000.

### <Preparation of Block Copolymer Composition B>

The block copolymer composition B of styrene and 1,3-butadiene was produced by the following operations (1) to (6) .
(1) 500.0 kg of cyclohexane and 75.0 g of tetrahydrofuran (THF) were charged into a reaction vessel.
(2) As a polymerization initiator solution, 2,157 mL of a 10 mass% hexane solution of n-butyl lithium was added thereinto, and the temperature was kept at 30°C.
(3) 20.5 kg of styrene was added, and the internal temperature was raised to 80°C to allow anionic polymerization of styrene.
(4) After styrene was completely consumed, the internal temperature of the reaction system was lowered to 50°C, then 30.7 kg of styrene and 41.9 kg of 1,3-butadiene were added, and the internal temperature was raised to 80°C for polymerization.
(5) After the monomers were completely consumed, the internal temperature of the reaction system was lowered to 50°C, then 6.9 kg of 1,3-butadiene was added, and the internal temperature was raised to 80°C for polymerization.
(6) Finally, after all polymerization active terminals were deactivated by water, the polymerization liquid was dropped into methanol, and the precipitate was dried to obtain the block copolymer composition B. The peak top molecular weight (Mp) was 68,000.

### <Preparation of Block Copolymer Composition C>

The block copolymer composition C of styrene and 1,3-butadiene was produced by the following operations (1) to (7) .
(1) 500.0 kg of cyclohexane and 75.0 g of tetrahydrofuran (THF) were charged into a reaction vessel.
(2) As a polymerization initiator solution, 1,410 mL of a 10 mass% cyclohexane solution of n-butyl lithium was added thereinto, and the temperature was kept at 30°C.
(3) 30.0 kg of styrene was added, and the internal temperature was raised to 80°C to allow anionic polymerization of styrene.
(4) After styrene was completely consumed, the internal temperature of the reaction system was lowered to 50°C, then 44.6 kg of styrene and 2.7 kg of 1,3-butadiene were added, and the internal temperature was raised to 80°C for polymerization.
(5) After the monomers were completely consumed, the internal temperature of the reaction system was lowered to 50°C, then 12.06.9 kg of 1,3-butadiene was added, and the internal temperature was raised to 80°C for polymerization.
(6) After styrene was completely consumed, the internal temperature of the reaction system was lowered to 55°C, and 60.0 kg of styrene was collectively added to complete polymerization.
(6) After 1,3-butadiene was completely consumed, 378 g of epoxidized soybean oil was added to the reaction system, and the internal temperature was lowered to 50°C for the reaction.
(7) Finally, after all polymerization active terminals were deactivated by water, the polymerization liquid was dropped into methanol, and the precipitate was dried to obtain the block copolymer composition C. The peak top molecular weight (Mp) was 90,000.

The measurement results of physical properties of the block copolymer composition A, the block copolymer composition B, and the block copolymer composition C prepared are shown in Table 1.

### (Measurement of Active Oxirane Oxygen Concentration)

The epoxy equivalent for calculating the active oxirane oxygen concentration was determined by titration with tetraethylammonium bromide in accordance with JIS K7236:2001. Specifically, the epoxy equivalent can be measured by dissolving a predetermined amount of polymer in chloroform, adding a crystal violet indicator, and titrating with perchloric acid acetic acid solution. From the value of the epoxy equivalent (mass) measured, the active oxirane oxygen concentration was calculated in accordance with the following formula. Active oxirane oxygen concentration = 1600 /epoxy equivalent

### <Butadiene Content Ratio (Mass) in Block Copolymer>

Each of the content ratios (mass%) of the butadiene monomer unit with respect to 100 mass% of the total mass of the styrene monomer unit and the butadiene monomer unit in the block copolymer in the block copolymer composition was calculated from the use ratio of 1,3-butadiene monomer with respect to the total monomer amount of styrene monomer and 1,3-butadiene monomer used in the above-described polymerization examples.

### (GPC Measurement)

The GPC measurement of the block copolymer composition was performed using the following GPC measurement equipment and conditions.
Equipment Name: HLC-8220GPC (made by Tosoh Corporation)
Column: ShodexGPCKF-404 (made by Showa Denko K.K.), 4 columns connected in series
Temperature: 40°C
Detection: differential refractive index
Solvent: tetrahydrofuran
Concentration: 0.2 mass%
Calibration Curve: prepared using standard polystyrene (made by Varian, Inc., peak top molecular weight (Mp) = 2,560,000, 841,700, 280,500, 143,400, 63,350, 31,420, 9,920, 2,930)

### (Mixing with Resin To Be Modified)

The block copolymer composition and the resin to be modified were melted and kneaded using a single screw extruder (HV-40-30, ϕ40 mm, made by TABATA Industrial Machinery Co., Ltd.) at an extrusion temperature of 200°C and a screw rotation speed of 100 rpm, extruded into a strand shape, cooled, and pelletized with a pelletizer.

The measurement results of physical properties of the block copolymer resin compositions using the block copolymer compositions A to C and amorphous polyethylene terephthalate as the resin to be modified are shown in Table 2.

### <Measurement of Physical Property of Block Copolymer Resin Composition>

Hereinafter, the measurement method of physical property evaluation items for the block copolymer resin composition containing the block copolymer composition of the present invention will be described.

### <Tensile Test>

(Measurements of Tensile Yield Stress, Tensile Break Nominal Strain, and Tensile Break Stress)

The tensile break nominal strain, which is an index of impact resistance, was measured in accordance with JIS K6871 using a dumbbell-shaped test piece type A prepared in accordance with JIS K7139:2009. At the same time, the tensile yield stress and tensile break stress were also measured as reference values.

### <Bending Test>

### (Measurement of Bending Modulus and Bending Strength)

As reference properties of the block copolymer resin composition, a rectangular test piece of type B prepared in accordance with JIS K7139:2009 was measured in accordance with JIS K7171:2016.

### (Measurement of Charpy Impact Strength)

The Charpy impact strength was measured using a notched test piece in accordance with JIS K7111-1:2012. Edgewise was adopted for the striking direction. Measurements were performed at a relative humidity of 50% and an ambient temperature of 23°C. Here, the digital impact tester made by Toyo Seiki Seisaku-sho, Ltd. was used as a measuring instrument.

### (Measurement of Total Light Transmittance)

The total light transmittance in the thickness direction was measured using the end portion of the above-described dumbbell-shaped test piece Type A (with a width of 20 mm and a thickness of 4 mm) in accordance with JIS K7375:2008, using a NDH5000 turbidimeter made by NIPPON DENSHOKU INDUSTRIES CO., LTD.

**[Table 1]**

| Table 1 | Unit | Block Copolymer Composition A | Block Copolymer Composition B | Block Copolymer Composition C |
|---|---|---|---|---|
| Mass Ratio of Vinyl Aromatic Hydrocarbon Monomer Unit / Conjugated Diene Monomer Unit | | 58.0/42.0 | 51.2/48.8 | 74.8/25.2 |
| Peak Top Molecular Weight (Mp) | ×10,000 | 6.5 | 6.8 | 9.0 |
| Active Oxirane Oxygen Concentration | mass% | 0.30 | 0.00 | 0.20 |

**[Table 2]**

| Table 2 | | | Unit | Example | | | | | Reference Example | Comparative Example | | | | | |
|---|---|---|---|---|---|---|---|---|---|---|---|---|---|---|---|
| | | | | 1 | 2 | 3 | 4 | 5 | 1 | 1 | 2 | 3 | 4 | 5 | 6 |
| Block Copolymer Resin Composition | Resin To Be Modified | GN001 | mass% | 90 | 80 | 70 | 55 | 50 | 100 | 90 | 80 | 50 | 80 | 70 | 55 |
| | Block Copolymer Composition | Block Copolymer Composition A | mass% | 10 | 20 | 30 | 45 | 50 | -- | -- | -- | -- | -- | -- | -- |
| | | Block Copolymer Composition B | mass% | -- | -- | -- | -- | -- | 0 | 10 | 20 | 50 | -- | -- | -- |
| | | Block Copolymer Composition C | mass% | -- | -- | -- | -- | -- | -- | -- | -- | -- | 20 | 30 | 45 |
| Evaluation Item | Tensile Test | Tensile Yield Stress | MPa | 40.0 | 36.0 | 29.0 | 21.0 | 18.0 | 47.0 | 39.0 | 32.0 | 6.0 | 45.0 | 43.0 | 40.0 |
| | | Tensile Break Nominal Strain | % | 188.0 | 112.0 | 190.0 | 229.0 | 262.0 | 149.0 | 126.0 | 116.0 | 252.0 | 118.0 | 200.0 | 80.0 |
| | | Tensile Break Stress | MPa | 27.0 | 22.0 | 25.0 | 25.0 | 24.0 | 27.0 | 23.0 | 18.0 | 100 | 23.0 | 24.0 | 13.0 |
| | Bending Test | Bending Modulus | MPa | 1620.0 | 1430.0 | 1170.0 | 890.0 | 890.0 | 1870.0 | 1590.0 | 1240.0 | 400.0 | 1680.0 | 1600.0 | 1500.0 |
| | | Bending Strength | MPa | 56.0 | 47.0 | 37.0 | 28.0 | 29.0 | 65.0 | 55.0 | 38.0 | 12.0 | 60.0 | 57.0 | 53.0 |
| | Impact Resistance | Charpy Impact Strength (with Notch) | kJ/m² | 10.2 | 9.4 | 13.6 | 60.7 | 82.5 | 7.5 | 9.2 | 12.7 | 59.8 | 6.2 | 5.2 | 3.5 |
| | Transparency | Total Light Transmittance | % | 81.8 | 84.2 | 84.2 | 84.8 | 85.6 | 86.3 | 67.7 | 70.4 | 65.5 | 77.2 | 78.5 | 79.6 |

As can be clearly seen from the comparison of Examples 1 to 5, Reference Example 1 and Comparative Examples 1 to 6, it is found that when the block copolymer composition A satisfying the requirements of the present invention is added to amorphous polyethylene terephthalate, it gradually imparts impact resistance to the resulting block copolymer resin composition without decreasing the transparency of the block copolymer resin composition.

### Industrial Applicability

The block copolymer composition containing the block copolymer of the present invention can impart impact resistance while preventing a decrease in transparency of the block copolymer resin composition obtained by mixing the block copolymer composition with an incompatible resin. It is suitably used as a molded article, a sheet and a container, and has industrial applicability.

## Claims

1. A block copolymer composition, containing a block copolymer containing a vinyl aromatic hydrocarbon monomer unit and a conjugated diene monomer unit, wherein:
a mass ratio of the vinyl aromatic hydrocarbon monomer unit to the conjugated diene monomer unit contained in the block copolymer is 70/30 to 50/50; and
an active oxirane oxygen concentration, calculated from an epoxy equivalent measured in accordance with JIS K7236:2001, is 0.05 mass% to 0.5 mass%.

2. The block copolymer composition of Claim 1, wherein a peak top molecular weight of the block copolymer composition is 30,000 to 100,000.

3. A block copolymer resin composition, containing: at least one resin selected from a group consisting of polyacrylate, polyphenylene ether, polycarbonate, polyester, polyamide, polyvinyl alcohol, polyacetal, polyether etherimide, polysulfone, and polyurethane; and the block copolymer composition of Claim 1 or 2 in a mass ratio of the resin / the block copolymer composition = 97/3 to 40/60, wherein a value of a total light transmittance measured in accordance with JIS K7375:2008 is 80% or higher and 100% or lower.

4. A molded article, sheet, or film, molded from a molding material containing the block copolymer resin composition of Claim 3.
